## Europäisches Patentamt

## European Patent Office

## Office européen des brevets

(11) Veröffentlichungsnummer: **0 202 665**
**A2**

## (12) EUROPÄISCHE PATENTANMELDUNG

(21) Anmeldenummer: **86106883.1**

(22) Anmeldetag: **21.05.86**

(51) Int. Cl.⁴: **F 02 M 23/04**

(30) Priorität: **24.05.85 DE 3518749**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Blume, Axel Jens**
**Kardinal-Schulte-Strasse 14**
**D-5060 Bensberg(DE)**

(71) Anmelder: **Pommer, Fredi**
**Bogenstrasse 1**
**D-5630 Remscheid(DE)**

(72) Erfinder: **Blume, Axel Jens**
**Kardinal-Schulte-Strasse 14**
**D-5060 Bensberg(DE)**

(72) Erfinder: **Pommer, Fredi**
**Bogenstrasse 1**
**D-5630 Remscheid(DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W. Döring**
**Kaiser-Wilhelm-Ring 41**
**D-4000 Düsseldorf 11(DE)**

(54) **Kraftstoffsparvorrichtung.**

(57) Es wird eine Vorrichtung zur Reduzierung des Kraftstoffverbrauches und zur Herabsetzung der Abgasschadstoffe für mit Vergasern oder Einspritzvorrichtungen versehenen Brennkraftmaschinen beschrieben. In der Luftansaugleitung der Brennkraftmaschine ist stromab der Drosselklappe eine Mischrohrdüse angeordnet, die Schlitzgruppen zur Einführung von Zusatzluft in die Luftansaugleitung aufweist. Die Zusatzluftzufuhr wird über einen Regler gesteuert. Die Steuerung des Reglers erfolgt in Abhängigkeit von bestimmten Kenndaten des Abgases der Brennkraftmaschine.

EP 0 202 665 A2

./...

FIG. 1

## Kraftstoffsparvorrichtung

Die vorliegende Erfindung betrifft eine Vorrichtung zur Reduzierung des Kraftstoffverbrauchs und zur Herabsetzung der Abgasschadstoffe bei mit Vergasern oder Einspritzvorrichtungen versehenen Brennkraftmaschinen nach dem Oberbegriff des Patentanspruchs 1.

In den beiden deutschen Patentanmeldungen P 33 43 791.1 und P 34 23 603.1 ist bereits ein sogenanntes Kraftstoffspargerät vorgeschlagen worden, das für vergaserbetriebene Brennkraftmaschinen geeignet ist. Dieses Gerät umfaßt im wesentlichen eine stromab der Drosselklappe des Vergasers im Ansaugkanal angeordnete Mischrohrdüse zur Einführung von Zusatzluft in den Ansaugkanal, einen vom stromauf der Drosselklappe herrschenden Unterdruck gesteuerten Regler für die Zusatzluftzufuhr und eine mit dem Kurbelgehäuse in Verbindung stehende, über den Regler in die Mischrohrdüse führende Zusatzluftzuführleitung. Der Zweck dieses Kraftstoffspargerätes besteht darin, das in die Brennkraftmaschine eingeführte Luft-Kraftstoff-Verhältnis durch Beimischung von Zusatzluft entsprechend abzumagern, um dadurch den Kraftstoffverbrauch und die schädlichen Bestandteile im Abgas zu senken. Wie erwähnt, wird hierbei die Zusatzluftzufuhr durch einen Regler gesteuert, der wiederrum vom stromauf der Drosselklappe herrschenden Unterdruck gesteuert wird. Herrscht im Ansaugkanal ein großer Unterdruck vor, wird somit viel Zusatzluft eingeführt und umgekehrt.

Der Erfindung liegt die Aufgabe zugrunde, eine Vorrichtung der angegebenen Art zu schaffen, die eine verfeinerte Steuerungsmöglichkeit in bezug auf die Beimischung von Zusatzluft besitzt.

Diese Aufgabe wird erfindungsgemäß bei einer Vorrichtung der im Oberbegriff des Patentanspruchs 1 beschriebenen Art dadurch gelöst, daß der Regler abgasabhängig gesteuert ist.

Erfindungsgemäß erfolgt somit die Beimischung von Zusatzluft in Abhängigkeit von dem von der Brennkraftmaschine abgegebenen Abgas, wodurch eine besonders genaue Anpassung der eingeführten Zusatzluftmenge an die tatsächlich auftretenden Verbrennungsverhältnisse erreicht werden kann. Erfindungsgemäß erfolgt somit der Abgriff der für die Steuerung des Reglers benötigten Parameter erst nach der Verbrennung, wodurch den tatsächlichen Gegebenheiten genauer Rechnung getragen werden kann als bei der vorstehend aufgezeigten unterdruckabhängigen Steuerung, bei der der Abgriff vor der Verbrennung erfolgt. Für die Bemessung der zuzuführenden Zusatzluftmenge werden vorgegebene Abgaskenndaten zugrunde gelegt. Weichen die IST-Kenndaten des Abgases von diesen vorgegebenen SOLL-Kenndaten ab, und zwar in einer Richtung, die die Zuführung von Zusatzluft erforderlich machen, wird der Regler betätigt, und es wird solange Zusatzluft zugeführt, bis die IST-Kenndaten den SOLL-Kenndaten wieder entsprechen.

Es ist grundsätzlich bekannt, das bei einer Brennkraftmaschine zur Verbrennung gelangende Luft-Kraftstoff-Gemisch bzw. die einzelnen Anteile dieses Gemisches in Abhängigkeit von bestimmten Abgaskennwerten der Brennkraftmaschine zu steuern. Hierzu gelangen Sonden zum Einsatz, die die Kenndaten des Abgases ermitteln und deren IST-Signale einem Steuergerät zugeführt werden, das in Abhängigkeit von diesen IST-Signalen das der Brennkraftmaschine zugeführte Luft-Kraftstoff-Verhältnis steuert, beispielsweise bei einer mit einer Einspritzvorrichtung versehenen Brennkraftmaschine die entsprechende Einspritzzeit des Kraftstoffes. Bei einer speziellen Ausführungsform der Erfindung wird nunmehr ebenfalls von einer derartigen Sonde Gebrauch gemacht und die Steuerung so ausgebildet, daß das Steuergerät den Regler für die Zusatzluftzufuhr steuert, und zwar derart, daß dieser die Zusatzluftzufuhrleitung öffnet, wenn die Abgaskennwerte von einem vorgegebenen Wert abweichen. Bei einer mit einer Lambda-Sonde zur Bestimmung des Restsauerstoffanteiles im Abgas versehenen Brennkraftmaschine steuert das Steuergerät erfindungsgemäß den Regler derart, daß dieser die Zusatzluftzufuhrleitung öffnet, wenn der Restsauerstoffanteil im Abgas von einem vorgegebenen Wert abweicht.

Die Ansteuerung des Reglers von dem der Sonde zugeordneten Steuergerät kann dabei entweder direkt oder unter Einschaltung eines Zwischenmediums erfolgen. Bei einer direkten Ansteuerung bewirken die vom Steuergerät abgegebenen Signale die Betätigung eines Sperrgliedes für die Zusatzluftzuführleitung des Reglers, der als Tauchkolben eines Solenoidventiles ausgebildet ist. Dieser Tauchkolben kann beispielsweise in eine geschlossene Stellung vorgespannt sein und wird durch Erregung der Wicklung über die vom Steuergerät abgegebenen Signale gegen die auf ihn ausgeübte Vorspannung zur Freigabe des Querschnittes der Zusatzluftzuführleitung bewegt. Bei Einschaltung eines Zwischenmediums kann beispielsweise der in den bereits eingangs genannten deutschen Patentanmeldungen P 33 43 791.1 und P 34 23 603.1 beschriebene Regler Verwendung finden, bei dem das Sperrglied des Reglers mit einer Membran gekoppelt ist, die mit Unterdruck von der Luftansaugleitung der Brennkraftmaschine beaufschlagbar ist. Hierbei ist erfindungsgemäß in der von der Luftansaugleitung zur Steuerkammer des Reglers führenden Unterdruckleitung ein Intervallventil angeordnet, das durch die vom Steuergerät abgegebenen Signale steuerbar ist. Das Intervallventil kann dabei beispielsweise ebenfalls als Solenoidventil ausgebildet sein. Es dient zum Steuern der Unterdruckzufuhr zur Steuerkammer des Reglers und kann beispielsweise die von der Luftansaugleitung zur Steuerkammer des Reglers führende Unterdruckleitung sperren, wenn keine Zusatzluftzufuhr gewünscht wird.

In bezug auf die Ausbildung des Steuergerätes ist die Erfindung keinen Beschränkungen ausgesetzt. So kann das Steuergerät beispielsweise einen Mikroprozessor umfassen, der eine programmgesteuerte Signalabgabe zur Betätigung des Reglers ermöglicht. Ferner können weitere Betriebsparameter der Brennkraftmaschine, beispielsweise die Brennkraftmaschinentemperatur, abgegriffen und dem Steuergerät zugeführt werden, wobei diese Parameter dort verarbeitet werden und in die zur Steuerung des Reglers abgegebenen Signale Eingang finden können. Wenn man beispielsweise eine Abmagerung des Luft-Kraftstoff-Gemisches erst dann wünscht, wenn die Brennkraftmaschine eine bestimmte Temperatur erreicht hat, kann man einen die Temperatur des Kühlmediums für die Brennkraftmaschine messenden Sensor vorsehen, dessen Signale vom Steuergerät verarbeitet werden und beispielsweise eine Signalabgabe solange verhindern, bis eine vorgegebene Brennkraftmaschinentemperatur erreicht ist.

Die Erfindung bezweckt ferner eine Weiterbildung der Mischrohrdüse. Diese ist erfindungsgemäß im Bereich des Luftansaugleitungsquerschnittes unter Bildung von zwei Kammern durch eine Trennwand unterteilt, wobei jeder Kammer eine Schlitzgruppe sowie eine Zusatzluftzuführleitung zugeordnet ist und wobei der Regler gleichzeitig die zu den beiden Kammern führenden Zusatzluftzuführleitungen steuert. Durch diese Ausführungsform wird sichergestellt, daß auch der Teil des Querschnittsbereiches der Luftansaugleitung, der am vom Regler gesehen hinteren Ende der Mischrohrdüse liegt, Zusatzluft in einer ausreichend großen Menge und mit einer ausreichend hohen Geschwindigkeit erhält, so daß eine gleichmäßige Verwirbelung über den Gesamtquerschnitt der Luftansaugleitung sichergestellt wird.

Es hat sich gezeigt, daß mit der in zwei Kammern aufgeteilten Mischrohrdüse in Verbindung mit der vorstehend beschriebenen abgasabhängigen Steuerung des Reglers besonders gute Ergebnisse erzielt werden, da die steuerungstechnisch erreichbare sehr feine und genaue Dosierung der Zusatzluft über den Regler nicht über eine ungenaue Verteilung der beigemischten Zusatzluft über den Querschnitt der Luftansaugleitung wieder zunichte gemacht wird. Vielmehr wird die erfindungsgemäß ausgebildete Mischrohrdüse mit zwei Kammern den an sie gestellten Anforderungen in bezug auf eine gleichmäßige Verwirbelung der Zusatzluft voll gerecht.

Weiterbildungen des Erfindungsgegenstandes gehen aus den Unteransprüchen hervor.

Die Erfindung wird nunmehr anhand von Ausführungsbeispielen in Verbindung mit der Zeichnung im einzelnen erläutert. Es zeigen:

Figur 1      eine schematische Darstellung des Aufbaus einer erfindungsgemäß ausgebildeten Vorrichtung;

Figur 2      eine Draufsicht auf den mit der Mischrohrdüse versehenen, in die Luftansaugleitung einzubauenden Flansch;

Figur 3      einen Vertikalschnitt durch den Regler der in Figur 1 gezeigten Vorrichtung;

Figur 4      einen Vertikalschnitt durch eine weitere Ausführungsform eines Reglers, bei der der Regler direkt angesteuert wird.

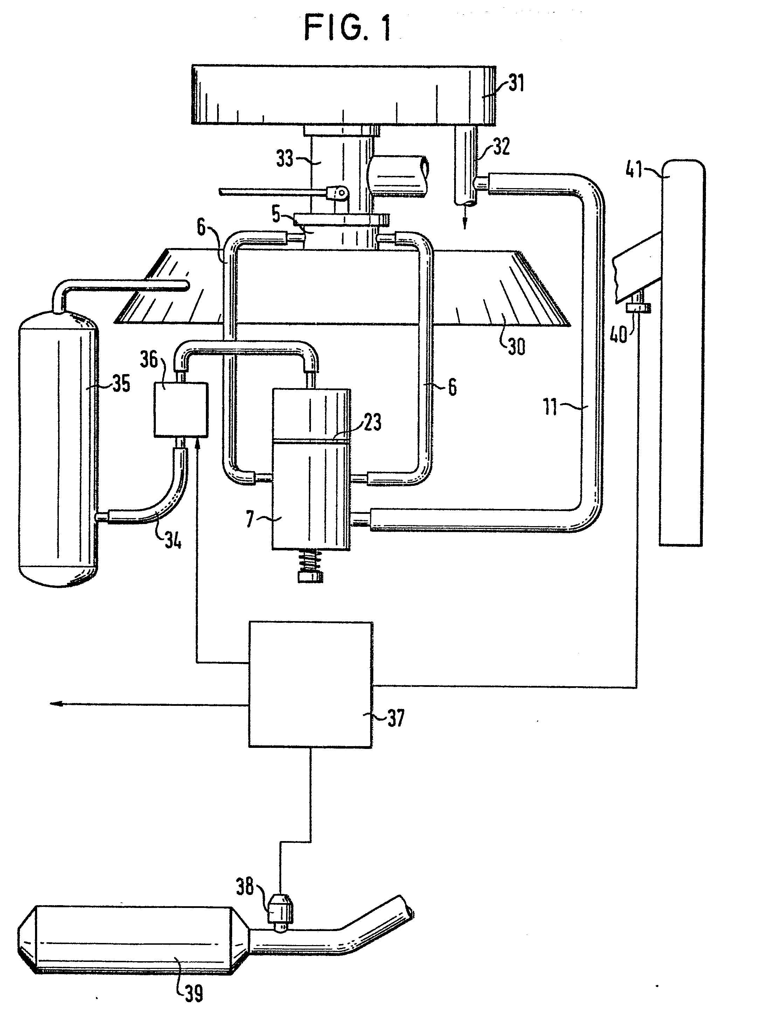

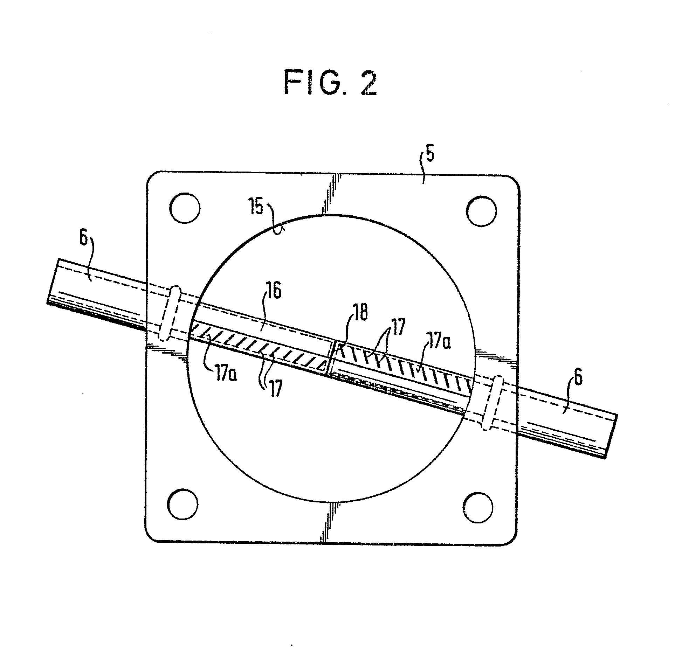

Zuerst wird auf die in Figur 1 gezeigte schematische Gesamtansicht einer Vorrichtung zur Reduzierung des Kraftstoffverbrauches und zur Herabsetzung der Abgasschadstoffe Bezug genommen. In die Luftansaugleitung bzw. den Luftansaugstutzen 30, 33 einer herkömmlich ausgebildeten Brennkraftmaschine, die entweder mit einem Vergaser oder mit einer Einspritzvorrichtung ausgestattet sein kann, ist stromab des Drosselteiles ein Flansch 5 eingesetzt, der eine an die Luftansaugleitung angepaßte Durchtrittsöffnung aufweist, in der sich die in Figur 2 gezeigte Mischrohrdüse 16 befindet. Der genauere Aufbau und die Funktionsweise der Mischrohrdüse werden weiter unten in Verbindung mit Figur 2 beschrieben. Der Mischrohrdüse 16 ist ein Regler 7 zugeordnet, von dem zwei Zusatzluftzuführleitungen 6 zur Mischrohrdüse abgehen. Der Regler steuert die den beiden Leitungen 6 und somit der Mischrohrdüse zugeführte Zusatzluft. Er

- 7 -

erhält diese Luft über eine Zusatzluftzuführleitung 11, die sowohl an das Luftfilter 31 als auch an eine zum Luftfilter 31 führende Entlüftungsleitung 32 des Kurbelgehäuses der Brennkraftmaschine angeschlossen ist. Mit anderen Worten, die Zusatzluft wird zumindest zum Teil aus der Abluft des Kurbelgehäuses der Brennkraftmaschine gewonnen, wie dies bereits in den eingangs genannten beiden Patentanmeldungen beschrieben ist.

Bei der hier dargestellten Auführungsform weist die Brennkraftmaschine eine Lambda-Sonde 38 auf, die stromauf des Vorschalldämpfers der Brennkraftmaschine angeordnet ist und den Restsauerstoffgehalt des Abgases ermittelt. Dieser Restsauerstoffanteil wird in Form von elektrischen Signalen an ein Steuergerät 37 weitergegeben, das die zugeführten IST-Signale mit einem vorgegebenen SOLL-Wert vergleicht und in Abhängigkeit von der auftretenden Differenz die Betätigung eines Intervallventiles 36 steuert, beispielsweise dieses Intervallventil 36 proportional zu dem Differenzwert zwischen dem IST-Wert und dem SOLL-Wert des Restsauerstoffanteils im Abgas der Brennkraftmaschine öffnet. Das Intervallventil 36 befindet sich in einer vom Ansaugstutzen 30 zur Steuerkammer des Reglers 7 führenden Unterdruckleitung 34, so daß durch Betätigung des Ventiles 36 der der Steuerkammer des Reglers 7 zugeführte Unterdruck gesteuert werden kann. In der Unterdruckleitung 34 befindet sich ferner ein Unterdruckspeicher 35. Der dem Regler 7 zugeführte Unterdruck beaufschlagt eine Membran 23, die mit einem Sperrglied gekoppelt ist, das in seiner Ruhelage die beiden Zusatzluftzuführleitungen 6 sperrt. Bei Erzeugung eines Unterdrucks in der Steuerkammer wird die Membran 23 entsprechend durchgebogen und somit das Sperrglied aus seiner Schließstellung

0202665

heraus bewegt.

Darüberhinaus ist am Kühler 41 der Brennkraftmaschine ein Sensor 40 vorgesehen, der dem Steuergerät 37 Signale zuführt, die die Temperatur der Brennkraftmaschine wiedergeben.

Die vorstehend beschriebene Vorrichtung funktioniert folgendermaßen:

Mit dem Einschalten des Zündsystems der Brennkraftmaschine wird auch das Steuergerät 37 in Betrieb gesetzt. Es wird davon ausgegangen, daß sich das Ventil 36 in einem geschlossenen Zustand befindet. Nach dem Starten des Motors ermittelt die Lambda-Sonde 38 laufend die Restsauerstoffkonzentration im Abgas und führt dem Steuergerät 37 entsprechende Signale zu. Das Steuergerät 37 vergleicht diese Signale mit vorgegebenen Daten, beispielsweise dem Restsauerstoffanteil eines gewünschten Abgases, wobei dieser vorgegebene Wert je nach Laufbedingung der Brennkraftmaschine variabel sein kann, und erzeugt bei Abweichen des IST-Wertes von dem vorgegebenen Wert ein entsprechendes Betätigungssignal für das Intervallventil 36. Dieses Betätigungssignal wird jedoch erst dann dem Ventil 36 zugeführt, wenn der Sensor 40 eine bestimmte vorgegebene Temperatur der Brennkraftmaschine erfaßt hat, beispielsweise 30 °C. Mit anderen Worten, bei Kaltlauf wird die hier in Rede stehende Vorrichtung abgeschaltet. Es versteht sich, daß natürlich auch andere Abgasparameter abgegriffen und in Abhängigkeit davon entsprechende Signale zur Betätigung des Ventiles 36 erzeugt werden können.

Unter der Voraussetzung, daß die Brennkraftmaschinentemperatur nunmehr 30 °C überschritten hat, wird das Ventil 36 vom Steuergerät 37 angesteuert. Dadurch gibt das entsprechende Ventilglied den Öffnungsquerschnitt der Unterdruckleitung 34 proportional zu dem vom Steuergerät 37 ermittelten Differenzwert frei. Da die Abgasmessung laufend erfolgt, wird der Öffnungsquerschnitt kontinuierlich in Abhängigkeit von dem Differenzwert reduziert oder erweitert, so daß der in der Steuerkammer des Reglers 7 anstehende Unterdruck kontinuierlich, d.h. ohne große Stufen, geregelt wird. Der in der Steuerkammer des Reglers anstehende Unterdruck bewirkt ebenfalls eine kontinuierliche Steuerungs des Sperrgliedes, das dadurch gleichzeitig die Öffnungsquerschnitte der beiden Zusatzluftzuführleitungen 6 freigibt, wodurch die aus der Leitung 11 stammende Zusatzluft in die Mischrohrdüse eingeführt und gleichmäßig über die beiden Schlitzgruppen in die Luftansaugleitung eingeleitet wird.

In Verbindung mit Figur 2 wird nunmehr der Aufbau der Mischrohrdüse 16 beschrieben. Wie man Figur 2 entnehmen kann, umfaßt der die Mischrohrdüse 16 enthaltende Rechteckflansch 5 vier Befestigungslöcher, über die er montierbar ist, sowie eine mittig angeordnete Durchtrittsöffnung 15, deren Querschnitt an die Durchtrittsöffnung der Luftansaugleitung genau angepaßt ist. Die Mischrohrdüse 16 ist im Flansch 5 fest angeordnet und erstreckt sich in der hier gezeigten Draufsicht unter einem Winkel von ca. 20° zur Achse der stromauf davon vorgesehenen Drosselklappe. Im Bereich der Durchtrittsöffnung 15 besitzt die als Rohr ausgebildete Mischrohrdüse Schrägflächen 17, die dachförmig angeordnet sind, so daß die in der Luftansaugleitung strömende Luft von der Firstlinie beidseitig abgelenkt wird. Die Mischrohrdüse 16 besteht aus zwei Kammern, welche über eine Trennwand 18 voneinander getrennt sind. Auf den Schrägflächen, die unter einem Winkel von etwa 45° zur Horizontalen angeordnet sind, befindet sich jeweils eine Schlitzgruppe 17. Diese Schlitzgruppen 17 sind in der Draufsicht so angeordnet, daß sie mit der Mischrohrdüsenachse
einen stumpfen bzw. spitzen Winkel bilden. Ferner sind
die Schlitze der einen Schlitzgruppe entgegengesetzt
gerichtet wie die Schlitze der anderen Schlitzgruppe.
Zwischen der eigentlichen Mischrohrdüse 16 und den jeweiligen Zuführleitungen 6 ist ein Reduzierstück bzw.
eine Drossel vorgesehen.

Die durch die beiden Leitungen 6 zugeführte Zusatzluft
tritt gleichzeitig aus den beiden Schlitzgruppen 17 aus
und erfährt dabei durch die speziell angestellten Schlitze
eine Richtungsänderung, die etwa parallel zur Bohrungswandung der Luftansaugleitung verläuft, so daß neben
einer guten Vermischung der Hauptluft mit der Zusatzluft gleichzeitig eine Verwirbelung des den Verbrennungsräumen zugeführten Luftstromes erreicht wird.

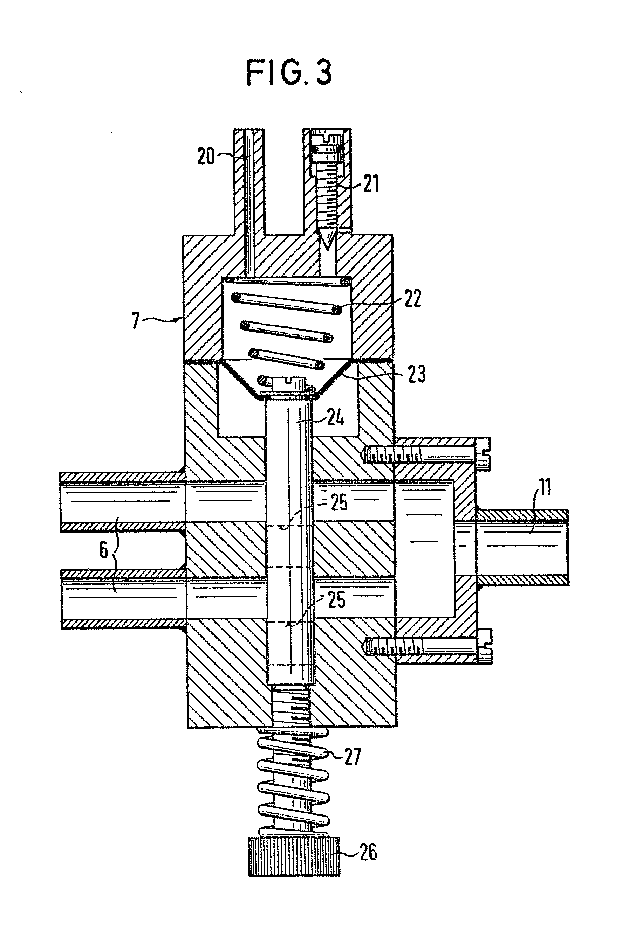

Figur 3 zeigt einen Vertikalschnitt durch den Regler
7 der in Figur 1 dargestellten Vorrichtung. In den Regler
mündet die vom Kurbelgehäuse bzw. Luftfilter kommende
Zusatzluftzuführleitung 11 ein, die sich dort in die
beiden zu den Kammern der Mischrohrdüse führenden Zusatzluftzuführleitungen 6 verzweigt. Der Regler besitzt
ein kolbenförmiges Sperrglied bzw. Stellglied 24, das
die Durchtrittsquerschnitte der Leitungen 6 steuert.
Diese Steuerung geschieht gleichzeitig, so daß die beiden
Kammern der Mischrohrdüse synchron mit Zusatzluft beaufschlagt werden, indem die beiden Durchtrittsöffnungen
25 des Stellgliedes in Richtung auf die beiden Leitungen
6 verschoben werden. Das obere Ende des Sperrgliedes
24 mündet in eine Steuerkammer, in der eine Feder 22
angeordnet ist, die das Sperrglied in die Schließstellung vorspannt. Das Sperrglied ist mit einer Membran

23 verbunden, die die Steuerkammer in zwei einzelne Kammern unterteilt. Die in der Figur obere Kammer ist mit einem an die Leitung 34 angeschlossenen Unterdruckanschluß 20 versehen, über die die Kammer mit dem durch das Ventil 36 modulierten Unterdruck des Ansaugstutzens 30 beaufschlagt wird. Ferner kann über eine Regelschraube 21 einer Bypassregelung Zusatzluft in gesteuerter Weise in die Kammer eingeführt werden.

Eine mit einer Feder 37 versehen, verstellbare Anschlagschraube 26 begrenzt die Schließstellung des Sperrgliedes 24. Hierdurch kann die unterste Stellung des Sperrgliedes variiert werden.

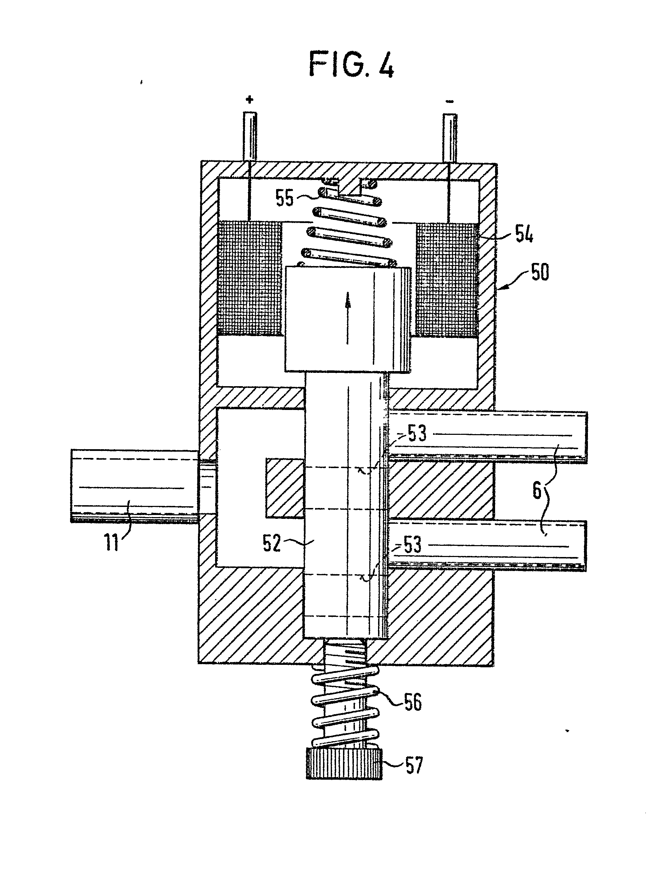

Figur 4 zeigt eine Ausführungsform eines Reglers 50, der vom Steuergerät 37 direkt angesteuert wird. Hierbei ist das Sperrglied bzw. Stellglied 52 des Reglers als Tauchkolben eines Solenoidventiles ausgebildet, dessen Wicklung 54 mit elektrischen Signalen vom Steuergerät 37 beaufschlagt wird. Das Sperrglied 52 ist über eine Feder 55 in seine Schließstellung vorgespannt. Der Regler funktioniert so, daß bei Signalzufuhr vom Steuergerät die Wicklung 54 erregt und durch das hierdurch gebildete elektromagnetische Feld der Tauchkolben gegen die Kraft der Feder 55 in Figur 4 nach oben gezogen wird, so daß die beiden Durchtrittsöffnungen 53 des Sperrgliedes mehr oder weniger zu den beiden Leitungen 6 ausgerichtet werden, so daß eine Zusatzluftzufuhr von der Leitung 11 zu den Leitungen 6 möglich ist. Wenn an der Wicklung 54 keine Spannung mehr anliegt, drückt die Feder 55 das Stellglied wieder in seine Schließstellung. Auch hierbei ist eine mit einer Feder 56 versehene, verstellbare Anschlagschraube 57 zur Begrenzung der Schließstellung des Sperrgliedes vorgesehen.

Es versteht sich, daß der Regler auch umgekehrt zu der in den Ausführungsbeispielen beschriebenen Weise funktionieren kann. Dort wird der Regler mittels einer Feder in die Schließstellung vorgespannt und durch Unterdruck bzw. den Aufbau eines elektromagnetischen Feldes geöffnet. Er kann jedoch auch mittels Unterdruck und den Aufbau eines elektromagnetischen Feldes geschlossen und durch Federdruck geöffnet werden.

Bei dem Ausführungsbeispiel, bei dem das Sperrglied des Reglers mittels Unterdruck betätigt wird, kann der hierfür benötigte Unterdruck stromauf oder stromab der Drosselklappe aus der Luftansaugleitung abgegriffen werden.

Die mit Unterdruck arbeitende Ausführungsform hat ferner den Vorteil, daß die Unterdruckleitung 34 an die ohnehin vorhandene, von der Luftansaugleitung zum Zündverteiler (Früh-Unterdruckdose) führende Leitung angeschlossen werden kann. In Fortbildung der Erfindung besitzt der Regler hierbei eine Bypassregelung zur Beaufschlagung der Steuerkammer mit Außenluft, beispielsweise in der Form einer im Reglergehäuse angeordneten, mit der Steuerkammer in Verbindung stehenden Bohrung, in die ein manuell verstellbares, nadelförmiges Element eingeschraubt ist. Durch Verstellung dieses Elementes wird der Durchtrittsquerschnitt der Bohrung vergrößert oder verkleinert, so daß mehr oder weniger Außenluft in die Steuerkammer eingeführt werden kann. Hierdurch wird nicht nur eine Modulation der Betätigung des Sperrgliedes des Reglers erreicht, sondern auch der an der Früh-Unterdruckdose des Zündverteilers anstehende Unterdruck variiert, und zwar derart, daß der vorgegebene Frühzündverstellweg beeinflußt und in Richtung "Spät" verschoben wird.

Patentansprüche:

1. Vorrichtung zur Reduzierung des Kraftstoffverbrauchs und zur Herabsetzung der Abgasschadstoffe bei mit Vergasern oder Einspritzvorrichtungen versehenen Brennkraftmaschinen mit einer in der Luftansaugleitung der Brennkraftmaschine stromab der Drosselklappe angeordneten Mischrohrdüse, die Schlitzgruppen zur Einführung von Zusatzluft in die Luftansaugleitung aufweist, einem Regler für die Zusatzluftzufuhr und einer direkt mit dem Kurbelgehäuse in Verbindung stehenden, über den Regler in die Mischrohrdüse führenden Zusatzluftzuführleitung, dadurch gekennzeichnet, daß der Regler (7, 50) abgasabhängig gesteuert ist.

2. Vorrichtung nach Anspruch 1 für eine mit einer Sonde zur Bestimmung bestimmter Abgaskennwerte der Brennkraftmaschine versehene Brennkraftmaschine, deren IST-Signale einem Steuergerät zugeführt werden, das in Abhängigkeit von diesen IST-Signalen das der Brennkraftmaschine zugeführte Luft-Kraftstoff-Verhältnis steuert, dadurch gekennzeichnet, daß das Steuergerät (37) den Regler (7, 50) für die Zusatzluftzufuhr derart steuert, daß dieser die Zusatzluftzuführleitung (6) öffnet, wenn die Abgaskennwerte von einem vorgegebenen Wert abweichen.

3. Vorrichtung nach Anspruch 2 mit einer Lambda-Sonde zur Bestimmung des Restsauerstoffanteils im Abgas, dadurch gekennzeichnet, daß das Steuergerät (37) den Regler (7, 50) derart steuert, daß dieser die Zusatzluftzuführleitung (6) öffnet, wenn der Restsauerstoffanteil im Abgas von einem vorgegebenen Wert abweicht.

4. Vorrichtung nach einem der Ansprüche 2 oder 3, dadurch gekennzeichnet, daß das Steuergerät (37) in Abhängigkeit von den IST-Signalen der Sonde (38) Signale zur Betätigung eines Sperrgliedes (24, 52) des Reglers (7, 50) für die Zusatzluftzuführleitung (6) abgibt.

5. Vorrichtung nach Anspruch 4, dadurch gekennzeichnet, daß das Sperrglied (52) der Tauchkolben eines Solenoidventiles ist, dessen Wicklung (54) durch die vom Steuergerät (37) zugeführten Signale erregbar bzw. aberregbar ist.

6. Vorrichtung nach Anspruch 4, bei der das Sperrglied mit einer Membran gekoppelt ist, die mit Unterdruck von der Luftansaugleitung der Brennkraftmaschine beaufschlagbar ist, dadurch gekennzeichnet, daß in der von der Luftansaugleitung (30) zur Steuerkammer des Reglers (7) führenden Unterdruckleitung (34) ein Intervallventil (36) angeordnet ist, das durch die vom Steuergerät (37) abgegebenen Signale steuerbar ist.

7. Vorrichtung nach Anspruch 6, dadurch gekennzeichnet, daß die Unterdruckleitung durch einen Vakuum-Speicher (35) führt.

8. Vorrichtung nach Anspruch 2, dadurch gekennzeichnet, daß das Steuergerät einen Mikroprozessor umfaßt.

9. Vorrichtung nach Anspruch 2, dadurch gekennzeichnet, daß das Steuergerät den Abgas-IST-Wert mit einem Abgas-SOLL-Wert vergleicht, der variabel und an die jeweiligen Laufbedingungen der Brennkraftmaschinen angepaßt ist.

10. Vorrichtung nach Anspruch 2, dadurch gekennzeichnet, daß das Steuergerät (37) erst dann Signale zur Zufuhr von Zusatzluft abgibt, wenn die Brennkraftmaschine eine bestimmte Temperatur erreicht hat.

11. Vorrichtung nach einem der vorangehenden Ansprüche, dadurch gekennzeichnet, daß die Mischrohrdüse (16) im Bereich des Luftansaugleitungsquerschnittes unter Bildung von zwei Kammern durch eine Trennwand (18) unterteilt ist und daß jeder Kammer eine Schlitzgruppe (17) sowie eine Zusatzluftzuführleitung (6) zugeordnet ist, wobei der Regler (7, 50) gleichzeitig die zu den beiden Kammern führenden Zusatzluftzuführleitungen (6) steuert.

12. Vorrichtung nach einem der vorangehenden Ansprüche, dadurch gekennzeichnet, daß in den beiden Zusatzluftzuführleitungen (6) eine Drossel angeordnet ist.

13. Vorrichtung nach einem der vorangehenden Ansprüche, dadurch gekennzeichnet, daß der Regler (7, 50) ein einziges vorgespanntes Sperrglied (24, 52) für beide Zusatzluftzuführleitungen (6) aufweist und daß ein verstellbarer Anschlag (26, 57) für das Sperrglied vorgesehen ist.

14. Vorrichtung nach einem der vorangehenden Ansprüche, dadurch gekennzeichnet, daß die Zusatzluftzuführleitung (11) ausschließlich die Abluftleitung des Kurbelgehäuses ist.

15. Vorrichtung nach Anspruch 6 oder 7, dadurch gekennzeichnet, daß die Unterdruckleitung (34) stromab der Drosselklappe an die Luftansaugleitung (30) angeschlossen ist.

16. Vorrichtung nach einem der Ansprüche 6, 7 oder 15, dadurch gekennzeichnet, daß die Unterdruckleitung an die von der Luftansaugleitung zum Zündverteiler (Früh-Unterdruckdose) führende Leitung angeschlossen ist.

17. Vorrichtung nach Anspruch 16, dadurch gekennzeichnet, daß der Regler eine Bypassregelung zur Beaufschlagung seiner Steuerkammer mit Außenluft aufweist.

# FIG. 1

# FIG. 2

0202665

## FIG. 3

0202665

# FIG. 4